# EUROPÄISCHE PATENTSCHRIFT

(11) **EP 4 069 545 B1**
(45) Veröffentlichungstag und Bekanntmachung des Hinweises auf die Patenterteilung: **31.07.2024**
(21) Anmeldenummer: 20820376.0
(22) Anmeldetag: 04.12.2020
(51) Int. Cl.: B60K 35/00, B60K 35/23, B60K 35/60, G02B 27/01

(54) **KRAFTFAHRZEUG MIT EINEM ANZEIGESYSTEM SOWIE EIN BETRIEBSVERFAHREN HIERZU**
MOTOR VEHICLE HAVING A DISPLAY SYSTEM AND AN OPERATING METHOD THERFORE
VÉHICULE À MOTEUR ÉQUIPÉ D'UN SYSTÈME D'AFFICHAGE ET UNE MÉTHODE D'EXPLOITATION ASSOCIÉ

(30) Priorität: 06.12.2019 DE 102019133295
(43) Veröffentlichungstag der Anmeldung: 12.10.2022
(73) Patentinhaber: AUDI AG, 85045 Ingolstadt (DE)
(72) Erfinder: LOTTES, Daniel, 93346 Ihrlerstein (DE); WEIß, Philipp, 85049 Ingolstadt (DE); MATTHAI, Annegret, 85296 Rohrbach (DE)
(74) Vertreter: Hofstetter, Schurack & Partner
(86) Internationale Anmeldenummer: PCT/EP2020/084574
(87) Internationale Veröffentlichungsnummer: WO 2021/110889

(56) Entgegenhaltungen:
- EP-A1- 3 549 806
- EP-A2- 2 174 833
- EP-B1- 3 549 806
- DE-A1- 102013 014 446
- FR-A1- 3 056 773
- US-B2- 8 049 609

## Beschreibung

Die Erfindung betrifft ein Kraftfahrzeug mit einem Anzeigesystem. Ferner betrifft die Erfindung ein Verfahren zum Betreiben eines derartigen Kraftfahrzeugs.

Für einen Insassen eines Kraftfahrzeugs, insbesondere einen Fahrer des Kraftfahrzeugs, kann es von Interesse sein, während einer Fahrt mit dem Kraftfahrzeug eine fahrzeugrelevante Information angezeigt zu bekommen. Anhand der angezeigten fahrzeugrelevanten Information kann dem Insassen beispielsweise ein versuchter Verbindungsaufbau zum Kommunizieren mit einer Person außerhalb des Kraftfahrzeugs, einen Beschleunigungsvorgang zum Erreichen einer eingestellten Zielgeschwindigkeit, ein mittels Betätigen eines Fahrtrichtungsanzeigers ausgewählter beabsichtigter Lenkvorgang oder ein Ladezustand eines mit dem Kraftfahrzeug gekoppelten mobilen Endgeräts visuell mittels optischer Signale ausgegeben werden. In diesem Zusammenhang können die optischen Signale zum Erzeugen eines realen und/oder virtuellen Bildes vor einem schwarzen Hintergrund, beispielsweise im Bereich eines Siebdrucks, eingesetzt werden.

Hierzu offenbart die DE 10 2009 020 824 A1 ein virtuelles Bildsystem für mehrschichtige Windschutzscheiben, das eine Bildquelle an der Windschutzscheibe reflektiert. Hierzu kann die Bildquelle mittels Licht erzeugen, die an der Windschutzscheibe derart reflektiert werden, dass scheinbar hinter der Windschutzscheibe ein virtuelles Bild für den Fahrer zu sehen ist. Das virtuelle Bild kann eine Form einer lateral angeordneten Vielzahl von nebeneinanderliegenden Anzeigeeinrichtungen aufweisen, wobei jede Anzeigeeinrichtung dem Fahrer bezüglich jeweiliger ausgewählter Zustände des Kraftfahrzeugs eine Information übermittelt.

Nachteilig bei einem derartigen virtuellen Bildsystem ist, dass zum Erzeugen einer großflächigen virtuellen Anzeige eine Vielzahl an Anzeigeeinrichtungen bereitzustellen sind.

Alternativ kann auch eine Verbundglasscheibe einer zwischen zwei Scheiben angeordneten Leiterfolie bzw. Leiterplatte als eine Anzeige realisiert sein. Eine derartige Ausgestaltung offenbaren beispielsweise die DE 10 2013 003 686 A1 und die DE 10 2015 016 281 A1.

Die US 8,049,609 B2 offenbart Anzeigevorrichtung mit einer Anzeigeeinheit, die auf einer Oberfläche eines Armaturenbretts eines Fahrzeugs gegenüber einer Windschutzscheibe des Fahrzeugs vorgesehen ist und so konfiguriert ist, dass sie eine Vielzahl von Informationspunkten V in einer Reihe oder in einem rechteckigen Feld auf der Windschutzscheibe anzeigt.

Die EP 2 174 833 A2 beschreibt eine optische Anzeigevorrichtung mit einer Vielzahl von Lichtquellen, welche wenigstens teilweise unabhängig voneinander steuerbar sind und wenigstens teilweise zur Ausgabe einer Information an den Kraftfahrzeugführer zusammenwirken.

Die DE 10 2013 014 446 A1 zeigt eine Kollisionswarnvorrichtung, die eine Anzeigeeinrichtung mit mehreren Lichtquellen zur asymmetrischen Lichtverteilung.

Die FR 3056773 A1 betrifft eine Vorrichtung zur Unterstützung des Fahrens eines Kraftfahrzeugs, die eine Projektionseinrichtung umfasst, die so beschaffen ist, dass sie eine Vielzahl von Lichtstrahlen aussenden kann.

Die EP 3 549 806 A1 offenbart Anzeigesystem für den Fahrzeuginnenraum.

Des Weiteren kann eine Anzeige mittels Leuchtmittels bereitgestellt werden, die zwischen Scheiben einer laminierten Windschutzscheibe angeordnet sein und auf eine entsprechende Anregung Licht emittieren können. Derartige Ausgestaltungen finden sich beispielsweise in der WO 2009/122094 A1, der WO 2017/103426 A1 und der US 2014/355106 A1.

Nachteilig bei derartigen in die Windschutzscheibe integrierten Anzeigen ist, dass ein Austausch der Anzeige und/oder der Windschutzscheibe selbst mit hohem technischen Aufwand und hohen Kosten verbunden ist.

Es ist die Aufgabe der Erfindung, eine Lösung bereitzustellen, mittels derer ein virtuelles Bild in einem Kraftfahrzeug bereitgestellt werden kann.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Der Erfindung liegt die Erkenntnis zugrunde, dass eine Windschutzscheibe eines Kraftfahrzeugs selbst und an der Windschutzscheibe angeordnete Komponenten des Kraftfahrzeugs, wie Verkleidungen eines Armaturenbretts, als Anzeigefläche eines Anzeigesystems für einen Insassen des Kraftfahrzeugs eingesetzt werden können. Hierzu kann zumindest eine Bildquelle Lichtstrahlen emittieren, das heißt aussenden, die in einem Reflexionsbereich zum Erzeugen von einem virtuellen Bild reflektiert werden können. Um einen besonders hohen Kontrast des virtuellen Bild realisieren zu können, kann ein opaker Hintergrund, insbesondere ein schwarzer Hintergrund, beispielsweise im Bereich eines sogenannten Schwarzdrucks der Scheibe, als Reflexionsbereich eingesetzt werden. Bei einer derartigen Anzeige können Kosten zum Bereitstellen und zum Warten des Anzeigesystems sowohl von der zumindest einen Bildquelle als auch dem Reflexionsbereich vorgegeben werden. Daher kann beispielsweise ein gezielter Einsatz der zumindest einen Bildquelle ausreichen, um fahrzeugrelevante Information selektiv mit einem ausreichenden Informationsgehalt anzuzeigen, aber dennoch einen Blick einen Fahrer auf ein aktuelles Verkehrsgeschehen zu erlauben.

Durch die Erfindung ist ein Kraftfahrzeug mit einem Anzeigesystem bereitgestellt. Das erfindungsgemäße Kraftfahrzeug ist bevorzugt als Kraftwagen, insbesondere als Personenkraftwagen oder Lastkraftwagen, oder als Personenbus oder Motorrad ausgestaltet. Hierbei umfasst das Kraftfahrzeug eine Windschutzscheibe mit zumindest einer Scheibenschicht. Insbesondere handelt es sich um die aus Verbundglas gefertigte Windschutzscheibe, die mehrere Scheibenschichten umfasst, die mittels eines Laminierverfahrens miteinander verbunden sind. Dabei kann die zumindest eine Scheibenschicht in einem Mittelbereich transparent ausgebildet sein, sodass in einer Einbaulage der Windschutzscheibe im Kraftfahrzeug für einen Insassen ein Blick auf das Verkehrsgeschehen möglich ist. In einem Randbereich der zumindest einen Scheibenschicht kann ein Siebdruckrand (Schwarzdruck) angebracht sein, welcher eine UV-sensitive Klebeverbindung vor einer frühzeitigen Alterung schützt. Des Weiteren weist das Kraftfahrzeug zumindest eine in einem Armaturenbrett des Kraftfahrzeugs positionierte Bildquelle auf, die dazu eingerichtet ist, Lichtstrahlen zu emittieren. Hierzu kann die zumindest eine Lichtquelle in dem Armaturenbrett positioniert sein und Lichtstrahlen aussenden. Bei dem Armaturenbrett kann es sich um eine Anzeige- oder Instrumententafel mit Messanzeigern (zum Beispiel für ein Tachometer und/oder einen Drehzahlmesser, Kontrollleuchten für einen Fahrtrichtungsanzeiger) und Bedienungshebeln (zum Beispiel der Fahrtrichtungsanzeiger, ein Fernlicht) des Kraftfahrzeugs handeln. Die zumindest eine Bildquelle kann als elektrisches Leuchtmittel ausgebildet sein, wobei es sich beispielsweise um ein LED-Leuchtmittel (lichtemittierende Leuchtdiode) auf Halbleiterbasis handeln kann. Die emittierten Lichtstrahlen werden zum Erzeugen von einem virtuellen Bild mittels eines Reflexionsbereichs reflektiert. Das bedeutet, dass die Lichtstrahlen an einer reflektierenden Fläche des Reflexionsbereichs zurückgeworfen werden und das virtuelle Bild erzeugen. Dabei scheint das virtuelle Bild im Raum zu schweben und ist örtlich vom Reflexionsbereich entkoppelt.

Der Reflexionsbereich erstreckt sich parallel zu einer Seitenkante der zumindest einen Scheibenschicht, die in der Einbaulage der Windschutzscheibe im Kraftfahrzeug an dem Armaturenbrett angeordnet ist. Mit anderen Worten ist der Reflexionsbereich in einem Wurzelbereich der Windschutzscheibe angeordnet, wobei der Wurzelbereich von jeweiligen Wurzeln jeweiliger A-Säulen des Kraftfahrzeugs vorgegeben ist. Dabei bilden die Seitenkante der zumindest einen Scheibenschicht und eine Begrenzungskante des Reflexionsbereichs, die der Seitenkante entgegengesetzt angeordnet ist, zwei Geraden, die in einer Ebene liegen und einander nicht schneiden. Erfindungsgemäß ist der Reflexionsbereich entlang zumindest eines Seitenbereichs der zumindest einen Scheibenschicht an zumindest einer Scheibenfläche angeordnet. Mit anderen Worten ist der Reflexionsbereich an dem Seitenbereich der zumindest einen Scheibenschicht positioniert, sodass zumindest drei Seitenkante der Scheibenschicht diesen einschließen, das heißt ein Reflexionsbereich begrenzen. Hierdurch ergibt sich der Vorteil, dass mittels der eingebauten Windschutzscheibe der Reflexionsbereich automatisch bereitstellt werden kann. Alternativ oder zusätzlich ist der Reflexionsbereich erfindungsgemäß entlang zumindest eines von der zumindest einen Scheibenschicht separaten Bauteils an einem Windschutzscheibenrahmen bereitgestellt. Mit anderen Worten umfasst das zumindest eine separate Bauteil den Reflexionsbereich, wobei das zumindest eine Bauteil unterschiedlich zu der Windschutzscheibe und an dem Windschutzscheibenrahmen angeordnet ist. Beispielsweise handelt es sich um eine auf dem Armaturenbrett aufgesetzte Verblendung. Hierdurch ergibt sich der Vorteil, dass bei einem Austausch der Windschutzscheibe unabhängig von dem Anzeigesystem realisiert werden kann. Somit kann beispielsweise eine konventionelle Windschutzscheibe eingebaut werden, die keine spezifischen Reflexionseigenschaften aufweist.

Des Weiteren ist erfindungsgemäß vorgesehen, dass die zumindest eine Bildquelle zumindest eine ausschließlich eindimensional schaltbare Streifenanzeige vorsieht. Mit anderen Worten ist die zumindest eine Bildquelle als die zumindest eine Streifenanzeige realisiert, die dazu eingerichtet ist, eine visuelle Linie anzuzeigen. Insbesondere kann es sich bei der zumindest einen Streifenanzeige um einen LED-Streifen handeln, wobei beispielsweise auf einer flexiblen Leiterplatte oberflächenmontierbare Leuchtdioden (SMD-LEDs oder Surface Mounted Device-LEDs) angeordnet sein können. Somit handelt es sich um eine in einer Kette aneinandergereihte einzelne Lichtquellen, die gemeinsam die zumindest eine Streifenanzeige bilden. Da es sich hierbei um eine technisch einfache und äußerst robuste Anzeige handelt, die über einen großen Längenabschnitt realisiert werden kann, kann diese besonders kostengünstig bereitgestellt und bei Bedarf ausgetauscht werden. Somit kann eine komplexe Darstellung bereits mittels einer geringen Anzahl an Bildquellen, das heißt der zumindest einen Bildquelle, mittels der zumindest einen Streifenanzeige besonders einfach realisiert werden. Dabei ist die zumindest eine Streifenanzeige parallel zu einer von einem Krümmungsradius vorgegebenen Seitenkante der zumindest einen Scheibenschicht und alternativ oder zusätzlich des zumindest einen Bauteils positioniert. Mit anderen Worten wird von der Seitenkante der zumindest einen Scheibenschicht und/oder dem zumindest einen Bauteil Krümmungsradius definiert, wobei ein Krümmungsradius der zumindest einen Streifenanzeige zu diesem korrespondiert, sodass ein Verlauf der zumindest einen Streifenanzeige und ein Verlauf der Seitenkante der zumindest einen Scheibenschicht und/oder des zumindest einen Bauteils in einer Ebene liegen und einander nicht schneiden.

Zusätzlich ist erfindungsgemäß vorgesehen, dass mittels einer Steuervorrichtung des Kraftfahrzeugs das virtuelle Bild bereitgestellt wird. Hierzu wird die zumindest eine Streifenanzeige selektiv von der Steuervorrichtung angesteuert. Dabei wird mittels der zumindest einen Streifenanzeige als das virtuelle Bild ein dynamisches Lauflicht zum Erzeugen eines Animationseffekts bereitgestellt. Mit anderen Worten wird die zumindest eine Streifenanzeige derart angesteuert, dass als das virtuelle Bild das dynamische Lauflicht entsteht. Hierzu können jeweils nachfolgende Lichtquellen der zumindest eine Streifenanzeige in zumindest einer Richtung angesteuert werden, um einen Eindruck zu erzeugen, dass sich das virtuelle Bild in die zumindest eine Richtung bewegt. Hierdurch ergibt sich der Vorteil, dass mittels des dynamisehen Lauflichts eine besonders hohe Aufmerksamkeit beim Insassen erzeugt und der Insasse dadurch besonders effizient auf eine kritische Situation aufmerksam gemacht werden kann. Alternativ oder zusätzlich kann als das virtuelle Bild der statische Lichtstreifen ausgegeben werden. Das erzeugte virtuelle Bild ist somit ein linienförmiger Leuchtstreifen. Hierdurch ergibt sich der Vorteil, dass eine Linienform einen Blick des Insassen bündelt und als Designelement eine Anmutung einer Innenausstattung des Kraftfahrzeugs erzeugt. Dabei wird mittels des dynamischen Lauflichts und alternativ oder zusätzlich des statischen Lichtstreifen ein Einstellvorgang, eine vorgenommene Einstellung eines Steuerparameters und/oder ein verbleibendes Verhältnis einer Speicherkapazität zu einer Gesamtspeicherkapazität angezeigt. Mit anderen Worten wird anhand des virtuellen Bild der Einstellvorgang, beispielsweise ein versuchter Verbindungsaufbau eins mobilen Endgeräts zum Aufbau einer Kommunikationsverbindung mit einer Person außerhalb des Kraftfahrzeugs oder ein Beschleunigungsvorgang zum Erreichen einer eigenstellten Zielgeschwindigkeit, optisch nachgebildet. Alternativ oder zusätzlich wird anhand des virtuellen Bildes der eingestellte Steuerparameter ausgegeben, beispielsweise ein mittels Betätigen eines Fahrtrichtungsanzeigers angekündigter beabsichtigter Lenkvorgang oder dessen Einsatz als Warnblinkanalage. Alternativ oder zusätzlich wird als das virtuelle Bild auch ein Kapazitätsverhältnis angezeigt, wobei beispielsweise ein aktueller Ladezustand, das heißt die Speicherkapazität in Relation zu der Gesamtspeicherkapazität, des mit dem Kraftfahrzeug gekoppelten mobilen Endgeräts angezeigt oder eine Betriebsstoffanzeige (zum Beispiel eine Kraftstoffanzeige, eine Ölstandsanzeige) realisiert sein kann. Des Weiteren vorteilhaft ist, dass das virtuelle Bild im Vergleich zu einem konventionellen Head-up-Display (HUD oder Kopf-oben-Anzeige) für jeden Fahrzeuginsassen aus einer jeweiligen Sitzposition in einem Fahrzeuginnenraum erkennbar sein kann. Somit kann beispielsweise mittels des virtuellen Bilds von einem Fahrer und einem Beifahrer ein selber Bildinhalt wahrgenommen werden, wobei eine Verzerrung des virtuellen Bildes von einer Betrachtungsposition abhängig ist.

Es ist vorgesehen, dass die zumindest eine Bildquelle zusätzlich eine zumindest zweidimensional schaltbare Bildanzeige aufweist, die dazu eingerichtet ist, ein der zumindest eine Bildanzeige zugeordnetes virtuelles Bild durch selektives Ansteuern von die zumindest eine Bildanzeige bildenden Bildpunkten durch die Steuervorrichtung zu erzeugen. Mit anderen Worten weist die zumindest eine Bildquelle des Weiteren eine elektrisch ansteuerbare flächige Anzeige auf, mittels welcher optische Signale erzeugt werden können. Hierbei kann es sich um einen Bildschirm handeln, der beispielsweise als ein Feldemissionsbildschirm (FED), als ein Flüssigkristallbildschirm (LCD), insbesondere ein Dünnschichttransistorbildschirm (TFT-LCD), ein Kathodenstrahlröhrenbildschirm (CRT), als ein Plasmabildschirm, als eine Organischer Leuchtdiode-Bildschirm (OLED) oder als ein oberflächenleitender Elektronen-Emitter-Bildschirm (SED) realisiert sein kann. Alternativ oder zusätzlich kann der Bildschirm eine LED-Hintergrundbeleuchtung in Form zumindest eines Mini-LEDs oder eine Anordnung zumindest eines Mikro-LEDs umfassen. Die zumindest eine Bildanzeige kann beispielsweise eine Fläche (ein zweidimensionales Objekt) und/oder einen Körper (ein dreidimensionales Objekt) ausgeben. Hierdurch ergibt sich der Vorteil, dass bei Bedarf, beispielsweise wenn ein erforderlicher Informationsgehalt von der zumindest einen Streifenanzeige nur unvollständig abgebildet werden kann, mittels der zumindest einen Bildanzeige der Informationsgehalt vollständig ausgegeben werden kann.

Zu der Erfindung gehören auch Ausführungsformen, durch die sich zusätzliche Vorteile ergeben.

Eine weitere vorteilhafte Ausführungsform hierzu sieht vor, dass die zumindest eine Bildanzeige die zumindest eine Streifenanzeige in Richtung des Reflexionsbereichs überdeckt. Mit anderen Worten wird die zumindest eine Streifenanzeige von der zumindest einen Bildanzeige überlagert, sodass die zumindest eine Bildanzeige zwischen dem Reflexionsbereich und der zumindest einen Streifenanzeige angeordnet ist. Alternativ oder zusätzlich ist die zumindest eine Streifenanzeige im Bereich der zumindest einen Bildanzeige unterbrochen und grenzt an zwei einander gegenüberliegenden Seiten der zumindest einen Bildanzeige, falls die zumindest eine Streifenanzeige innerhalb einer von der zumindest einen Bildanzeige gebildeten Bildebene angeordnet ist. Mit anderen Worten befinden sich die zumindest eine Bildanzeige und die zumindest eine Streifenanzeige in einer Ebene, wobei die zumindest eine Bildanzeige an den zwei einander gegenüberliegenden Seiten von der zumindest einen unterbrochenen Streifenanzeige eingefasst ist. Alternativ oder zusätzlich sind die zumindest eine Bildanzeige und die zumindest eine Streifenanzeige zueinander in Richtung des Reflexionsbereichs überlappungsfrei angeordnet. Somit sind die beiden voneinander unterschiedlichen Anzeigen in Richtung des Reflexionsbereichs nebeneinander angeordnet, ohne dass eine der Anzeigen die andere der Anzeigen verdeckt, das heißt diese überlagert. Dabei ist in der der Einbaulage der Windschutzscheibe die zumindest eine Streifenanzeige zwischen der zumindest einen Bildanzeige und der den Reflexionsbereich umfassenden Seitenkante der zumindest einen Scheibenschicht und/oder die zumindest eine Bildanzeige zwischen der zumindest eine Streifenanzeige und der den Reflexionsbereich umfassenden zumindest einen Scheibenschicht positioniert. Somit bilden die beiden Anzeigen und der Reflexionsbereich einen sandwichartigen Aufbau. Je nach Art der Anordnung, wird die zumindest eine Streifenanzeige oder die zumindest eine Bildanzeige an der einen Seite von dem Reflexionsbereich und an der anderen Seite von der davon abweichenden der Anzeigen begrenzt. Hierdurch ergibt sich der Vorteil, dass mittels einer flexiblen Anordnung der beiden Anzeigen eine Vielzahl an Anzeigemöglichkeiten realisiert werden kann.

Eine weitere vorteilhafte Ausführungsform sieht vor, dass der Reflexionsbereich eine optisch durchgängige Anzeigefläche bildet, welche seitlich von zumindest einer der an die Windschutzscheibe angrenzenden A-Säulen des Kraftfahrzeugs eingefasst und/oder von zumindest einer digitalen Anzeige eines Seitenspiegels begrenzt ist. Mit anderen Worten wird mittels des Reflexionsbereichs das virtuelle Bild großflächig angezeigt, wobei sich die optisch durchgängige Anzeigefläche von der einen A-Säule auf einer Fahrerseite zur anderen der A-Säulen auf einer Beifahrerseite erstreckt. Alternativ oder zusätzlich ist an zumindest einem Ende der optisch durchgängigen Anzeigefläche die zumindest eine digitale Anzeige des Seitenspiegels angeordnet. Hierdurch ergibt sich der Vorteil, dass in einem gesamten Blickfeld eines Fahrzeuginsassen Informationen angezeigt werden können, wobei ein Blick des Insassen weiterhin auf einem zu befahrenen Straßenabschnitt ruhen kann. Als jeweilige seitliche Begrenzung der optisch durchgängigen Anzeigefläche kann zumindest eine der A-Säulen und/oder zumindest eine der digitalen Anzeige des Seitenspiegels genutzt werden. Alternativ oder zusätzlich kann durch die Anzeigefläche der Blick des Insassen von einer Mitte der Anzeigefläche zu einer Seite der Anzeigefläche mittels des virtuellen Bilds geführt werden, wenn anhand einer erfassten Umgebung des Kraftfahrzeugs eine kritische Situation erkannt wird. Bei der kritischen Situation kann es sich beispielsweise um einen unerwarteten Überholvorgang durch ein weiteres Kraftfahrzeug handeln, dass in einem toten Winkel des Insassen angeordnet ist.

Eine weitere vorteilhafte Ausführungsform sieht vor, dass die Steuervorrichtung bei der Ansteuerung der zumindest einen Bildquelle eine mittels einer Erfassungseinrichtung erfasste Position und/oder Orientierung eines Fahrzeugnutzers, insbesondere dessen Kopf und/oder Augen, und/oder eine erfasste Nutzerpräferenz berücksichtigt. Somit wird der Fahrzeugnutzer selbst und alternativ zusätzlich die von ihm eingegebene Nutzerpräferenz erfasst, um die zumindest eine Bildquelle in Abhängigkeit davon anzusteuern. Beispielsweise umfasst die Erfassungseinrichtung eine Kamera, insbesondere eine Fahrerbeobachtungskamera, die Daten erfasst, welche die Position und/oder Orientierung des Kopfes und/oder der Augen des Fahrzeugnutzers beschreiben. Anhand der erfassten Daten kann anschließend ein Standort des Kraftfahrzeugnutzers, das heißt die Position in einem Raum, wobei der Raum einen Innenraum des Kraftfahrzeugs umfasst, ermittelt werden. Alternativ oder zusätzlich kann eine Lage des Fahrzeugnutzers, das heißt die Orientierung in dem Raum basierend auf den erfassten Daten bestimmt werden. Alternativ oder zusätzlich kann die Ansteuerung der zumindest einen Bildquelle von der erfassten Nutzerpräferenz abhängig sein. In diesem Zusammenhang wird unter der Nutzerpräferenz eine vom Fahrzeugnutzer veranlasste Eingabe verstanden, die jeweilige Ausgabeparameter, beispielsweise eine Anzeigeintensität, eine Anzeigedauer, eine Anzeigefarbe, eine Relativposition und/oder eine Relativlage des virtuellen Bilds im Bezug zum Fahrzeugnutzer, festlegt. Anhand des erfassten Fahrzeugnutzers und/oder der erfassten Nutzerpräferenz wird das virtuelle Bild entlang zumindest einer von einer Fahrzeugrichtung vorgegebenen Raumachse verlagert, um eine in Bezug auf den Fahrzeugnutzer verdeckungsfreie Anzeige zu erzeugen. Mit anderen Worten wird das virtuelle Bild entlang der zumindest einen Raumachse verschoben, sodass der Fahrzeugnutzer stets einen direkten und uneingeschränkten Blick auf das virtuelle Bild erhält. Somit kann beispielsweise eine Größendifferenz von zwei voneinander unterschiedlichen Fahrzeugnutzern bei der Anzeige berücksichtigt werden. Hierdurch ergibt sich der Vorteil, dass die Anzeige in Abhängigkeit von dem Fahrzeugnutzer, das heißt dessen Körperbau und/oder dessen Bewegung und/oder dessen bevorzugten Anzeigeeinstellungen, angepasst werden kann. Alternativ oder zusätzlich kann eine perspektivische Anzeige realisiert und somit beispielsweise ein räumlicher Effekt erzeugt werden.

Eine weitere vorteilhafte Ausführungsform sieht vor, dass die zumindest eine Streifenanzeige zumindest zwei aneinander positionierte Einzelstreifen umfasst. Mit anderen Worten liegen zwei nebeneinander angeordnete Einzelstreifen vor, welche die zumindest eine Streifenanzeige bilden. Hierbei ist eine jeweilige Längserstreckungsachse jedes der zumindest zwei Einzelstreifen in einer zu dem Reflexionsbereich korrespondierend orientierten Ebene angeordnet. Diese Ebene wird beispielsweise von einer spezifischen Entfernung des virtuellen Bilds vom Betrachter in Fahrzeuglängsrichtung in Abhängigkeit von dem Reflexionsbereich vorgegeben. Innerhalb dieser Ebene werden die zumindest zwei Einzelstreifen derart positioniert, dass eine jeweilige Achse des jeweiligen Einzelstreifens, die einer jeweiligen Richtung einer jeweiligen größten Ausdehnung entspricht, in der Ebene liegen. Dabei ist zum Erzeugen des der zumindest einen Streifenanzeige zugeordneten virtuellen Bilds jeweils nur einer der zumindest zwei Einzelstreifen anzusteuern. Dadurch kann das virtuelle Bild mittels selektiver Ansteuerung der jeweiligen Einzelstreifen verändert werden, beispielsweise um das virtuelle Bild in einer Fahrzeughochrichtung zu verlagern, wobei die spezifische Entfernung des virtuellen Bilds zum Insassen konstant gehalten werden kann. Hierdurch ergibt sich der Vorteil, dass eine Position des Lichtstreifens und/oder des Lauflichts besonders einfach verändert werden kann, wobei auf eine aufwendige Displaytechnik, insbesondere jener eines Bildschirms, verzichtet werden kann.

Eine weitere vorteilhafte Ausführungsform sieht vor, dass die zumindest eine Streifenanzeige an einem mittels der Steuervorrichtung ansteuerbaren Aktuator angeordnet ist, der dazu eingerichtet ist, zum Verlagern des virtuellen Bildes eine Relativposition der zumindest einen Streifenanzeige zum Reflexionsbereich zu verändern. Mit anderen Worten kann die zumindest eine Streifenanzeige mittels des Aktuators räumlich verlagert werden, wobei in Abhängigkeit von einem Verlagern der zumindest einen Streifenanzeige eine Relativposition der zumindest einen Streifenanzeige in Bezug auf den Reflexionsbereich verändert wird. Bei dem Aktuator handelt es sich insbesondere um eine antriebstechnische Baueinheit, die ein elektrisches Steuersignal der Steuervorrichtung in eine mechanische Bewegung umsetzen kann. Hierbei kann der Aktuator beispielsweise als ein Gestell mit einem beweglichen Arm, mit einer Scherenkonstruktion oder einem senkrechten Mast ausgebildet sein. Hierdurch ergibt sich der Vorteil, dass die zumindest eine Streifenanzeige besonders variabel eingesetzt werden kann und somit eine Anzahl an eingesetzten und verbauten LED-Streifen reduziert werden kann.

Eine weitere vorteilhafte Ausführungsform sieht vor, dass der Reflexionsbereich zumindest einen Flächenabschnitt aufweist, der dauerhaft opak und schwarz gefärbt zum Erzeugen des virtuellen Bildes ist. Somit ist der zumindest eine Flächenabschnitt stets lichtundurchlässig, das heißt trüb, und schwarz. Hierdurch ergibt sich der Vorteil, dass der zumindest eine Flächenabschnitt jederzeit einen kontrastreichen Hintergrund für das virtuelle Bild bereitstellen kann. Alternativ oder zusätzlich kann der zumindest eine Flächenabschnitt mittels der Steuervorrichtung von einem transparenten in zumindest einen teilweise opaken und teilweise schwarz eingefärbten Zustand schaltbar zum Erzeugen des virtuellen Bildes ist. Somit wird der zumindest eine Flächenabschnitt selektiv angesteuert, um eine Durchlässigkeit und/oder eine Schwarzfärbung des zumindest einen Flächenabschnitts vorzugeben. Insbesondere kann ein entsprechender Verlauf, beispielsweise ein Tönungsverlauf, erzeugt werden. Hierdurch ergibt sich der Vorteil, dass der zumindest eine Flächenabschnitt für verschiedene Zwecke eingesetzt werden kann. So kann der zumindest eine Flächenabschnitt im zumindest teilweise opaken und teilweise schwarz eingefärbten Zustand zum Erzeugen des virtuellen Bilds verwendet und im transparenten Zustand zum störungsfreien Beobachten einer Fahrzeugumgebung durch den Insassen diesen.

Eine weitere vorteilhafte Ausführungsform hierzu sieht vor, dass der zumindest eine dauerhaft opak und schwarz gefärbt ausgebildete Flächenabschnitt einen Siebdruckrand umfasst. Somit umfasst der zumindest eine stets opake und schwarze Flächenabschnitt einen Siebdruckrand. Der Siebdruckrand, das heißt ein sogenannter Schwarzdruck, kann beispielsweise als ein schwarzer Scheibenrand ausgebildet sein, der einen durchgängig schwarzen und einen gepunkteten Abschnitt aufweist. Hierbei weist der Siebdruckrand mehrere Reflexionspartikel auf. Das heißt, der Siebdruckrand umfasst Partikel, die dazu eingerichtet sind, die emittierten Lichtstrahlen der zumindest einen Lichtquelle zu reflektieren. Hierdurch ergibt sich der Vorteil, dass dem Siebdruckdruckrand als Hintergrund für das virtuelle Bild und eine von diesem beanspruchte Fläche zum Erzeugen des virtuellen Bilds eingesetzt werden kann. Alternativ oder zusätzlich ist der zumindest eine schaltbare Flächenabschnitt von einem elektrochromen, thermochromen und/oder auf Flüssigkristallen basierenden Werkstoff gebildet. Mit anderen Worten umfasst der zumindest eine schaltbare Flächenabschnitt den elektrochromen, photochrom, thermochromen und/oder auf Flüssigkristallen basierenden Werkstoff. Hierbei handelt es sich insbesondere um Werkstoffe, die dazu eingerichtet sind, tönbare Verglasungen zu realisieren, indem eine Lichtdurchlässigkeit durch Anlegen einer elektrischen Spannung, veränderten Lichtverhältnissen und/oder als eine Reaktion auf eine Erwärmung verändert werden kann. Als elektrochromer Werkstoff wird beispielsweise Wolframtrioxid oder Polyanilin eingesetzt, als thermochromer Werkstoff beispielswiese Vandadiumdioxid verwendet, und der photochrome Werkstoff umfasst beispielsweise Halogene oder Nitrate. Bei dem auf Flüssigkristallen basierenden Werkstoff handelt es sich beispielsweise um ein LC-Glas (liquid crystal) oder ein PDLC-Glas (polymer dispersed liquid crystal).

Durch die Erfindung ist ein Verfahren zum Betreiben einer Ausführungsform eines erfindungsgemäßen Kraftfahrzeugs mit einem Anzeigesystem, wobei das Kraftfahrzeug eine Windschutzscheibe mit zumindest einer Scheibenschicht, zumindest eine Bildquelle, einen Reflexionsbereich und eine Steuervorrichtung umfasst. Die Steuervorrichtung weist eine Prozessoreinrichtung auf, die zumindest einen Mikroprozessor, zumindest einen Mikrocontroller, zumindest einen FPGA (Field Programmable Gate Array) und/oder zumindest einen DSP (Digital Signal Processor) umfasst. Des Weiteren kann die Prozessoreinrichtung einen Programmcode aufweisen, der in einem Datenspeicher der Prozessoreinrichtung gespeichert sein kann und dazu eingerichtet ist, bei einem Ausführen durch die Prozessoreinrichtung die Ausführungsform des erfindungsgemäßen Verfahrens durchzuführen. Die zumindest eine Bildquelle ist in einem Armaturenbrett des Kraftahrzeugs positioniert und sieht zumindest eine ausschließlich eindimensional schaltbare Streifenanzeige vor, wobei die zumindest eine Streifenanzeige im Armaturenbrett parallel zu einer von einem Krümmungsradius vorgegebenen Seitenkante der zumindest einen Scheibenschicht und/oder zumindest eines von der zumindest einen Scheibenschicht separaten Bauteils positioniert ist. Des Weiteren erstreckt sich der Reflexionsbereich parallel zu einer Seitenkante der zumindest einen Scheibenschicht und ist in einer Einbaulage der Windschutzscheibe im Kraftfahrzeug an dem Armaturenbrett angeordnet, wobei der Reflexionsbereich entlang zumindest eines Seitenbereichs der zumindest einen Scheibenschicht an zumindest einer Scheibenfläche und/oder entlang des zumindest einen Bauteils an einem Windschutzscheibenrahmen bereitgestellt ist. Das erfindungsgemäße Verfahren ist gekennzeichnet durch ein Erfassen eines Einstellvorgangs und/oder einer vorgenommen Einstellung eines Steuerparameters und/oder eines verbleibenden Verhältnisses der Speicherkapazität zu einer Gesamtspeicherkapazität. Anschließend werden Lichtstrahlen mittels der zumindest einen Bildquelle in Abhängigkeit von dem Erfassen emittiert, wobei die zumindest eine Bildquelle mittels der Steuervorrichtung angesteuert wird, und die emittierten Lichtstrahlen mittels des Reflexionsbereichs zum Erzeugen von einem virtuellen Bild reflektiert. Als das virtuelle Bild wird ein dynamisches Lauflicht zum Erzeugen eines Animationseffekts und/oder ein statischer Lichtstreifen zum Anzeigen des Einstellvorgangs und/oder der vorgenommen Einstellung des Steuerparameters und/oder des verbleibenden Verhältnisses der Speicherkapazität zu einer Gesamtspeicherkapazität bereitgestellt.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung eines Kraftfahrzeugs mit einem Anzeigesystem in einer Seitenansicht;
- Fig. 2: eine schematische Darstellung eines Ausschnitts des Kraftfahrzeugs mit dem Anzeigesystem in einer Draufsicht;
- Fig. 3: eine schematische Schnittdarstellung des Ausschnitts des Kraftfahrzeugs mit dem Anzeigesystem;
- Fig. 4: eine schematische Perspektivdarstellung eines Innenraums des Kraftfahrzeugs mit dem Anzeigesystem in einer Ausführungsform, wobei eine Blickrichtung durch eine Windschutzscheibe mit einer Vorwärtsbewegungsrichtung des Kraftfahrzeugs übereinstimmt; und
- Fig. 5: eine schematische Perspektivdarstellung analog zu Fig. 4 für eine weitere Ausführungsform des Kraftfahrzeugs mit dem Anzeigesystem.

Bei den im Folgenden erläuterten Ausführungsbeispielen handelt es sich um bevorzugte Ausführungsformen der Erfindung.

In den Figuren bezeichnen gleiche Bezugszeichen jeweils funktionsgleiche Elemente.

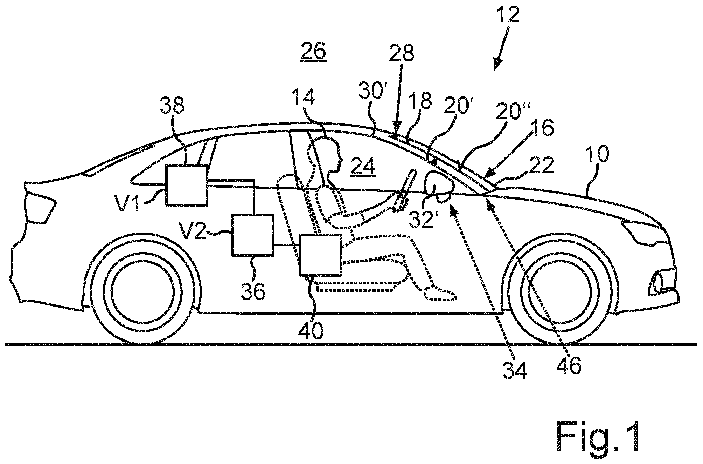

Fig. 1 zeigt eine schematische Darstellung eines Kraftfahrzeugs 10 mit einem Anzeigesystem 12 in einer Seitenansicht, wobei das Kraftfahrzeug 10 von einem Fahrzeugnutzer 14, das heißt einem in einem Fahrersitz sitzenden Fahrer, gesteuert werden kann. Des Weiteren kann das Kraftfahrzeug 10 eine Windschutzscheibe 16 umfassten, die eine Scheibenschicht 18 aufweisen kann. Insbesondere kann die Windschutzscheibe 16 als Verbundglasscheibe ausgebildet sein und mehrere aneinander angeordnete jeweilige Scheibenschichten 18 aufweisen. Die Scheibenschicht 18 kann von zwei Scheibenflächen 20', 20" und einer Seitenkante 22, insbesondere vier Seitenkanten 22, begrenzt sein. Hierzu kann eine Scheibenfläche 20` einem Innenraum 24 des Kraftfahrzeugs 10 und eine andere Scheibenfläche 20' einer Umgebung 26 des Kraftfahrzeugs 10 zugewandt sein. In einer Einbaulage der Windschutzscheibe 16 kann die Seitenkante 22 über einen Windschutzscheibenrahmen 28 an dem Kraftfahrzeug 10, insbesondere zwischen zwei A-Säulen 30', 30" und jeweiligen Seitenspiegeln 32', 32" beziehungsweise an einem Armaturenbrett 34 angeordnet sein, wobei in Fig. 1 nur die in der Darstellung sichtbare A-Säule 30' und der Seitenspiegel 32" mit einem jeweiligen Bezugszeichen versehen ist.

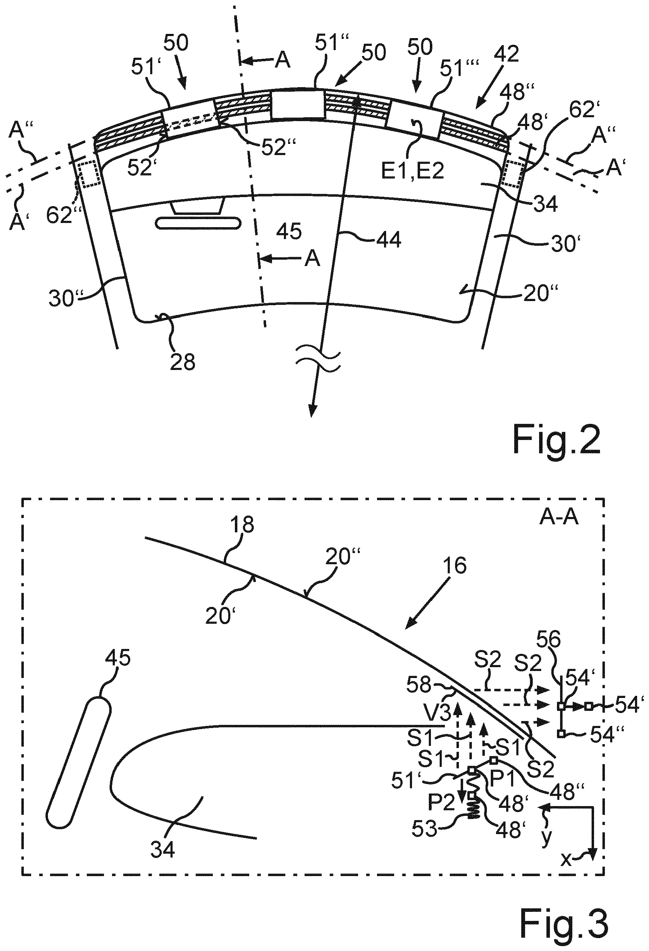

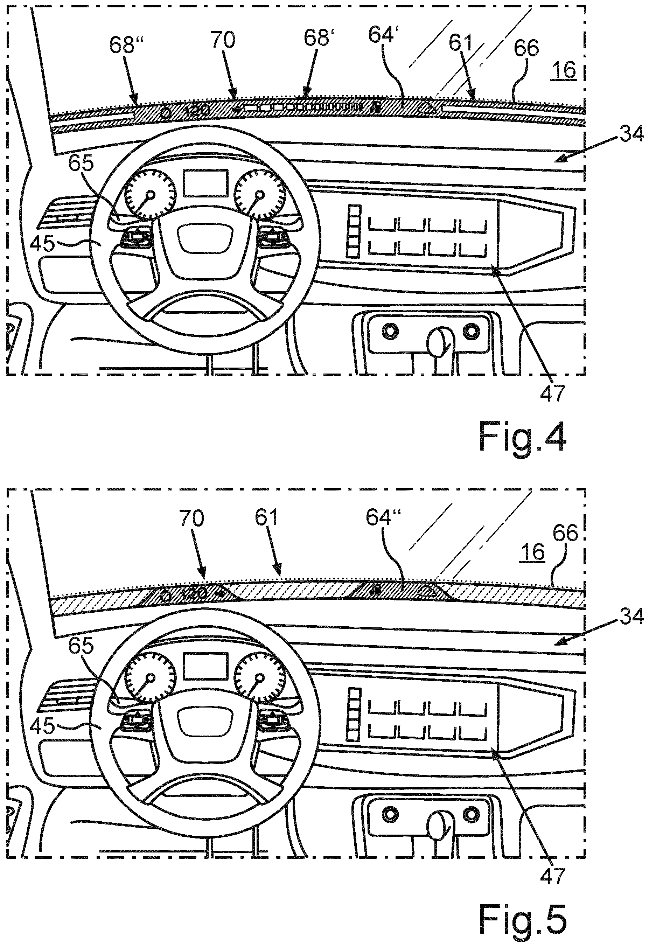

Des Weiteren kann das in Fig. 1 abgebildete Kraftfahrzeug 10 - jeweils vereinfacht als Kasten dargestellt - eine Steuervorrichtung 36, eine Erfassungseinrichtung 38 und eine Bildquelle 40 aufweisen. Dabei kann die Steuervorrichtung 36 in Abhängigkeit von mit der Erfassungseinrichtung 38 erfassten Daten die Bildquelle 40 ansteuern. Die Erfassungseinrichtung 38 kann insbesondere als eine Fahrerbeobachtungskamera einen Kopf und Augen des Fahrzeugnutzers 14 erfassen, anhand derer eine Position und eine Orientierung des Fahrzeugnutzers 14 durch die Steuervorrichtung 36 ermittelt werden kann. Des Weiteren kann die Erfassungseinrichtung 38 insbesondere als eine, beispielsweise in Fig. 4 und Fig. 5 gezeigte Benutzeroberfläche 47, ausgebildet sein, um eine Nutzerpräferenz, das heißt eine Eingabe des Fahrzeugnutzers 14, erfassen zu können. Die Bildquelle 40 wird nachfolgend im Zusammenhang mit Fig. 2 und Fig. 3 im Detail beschrieben.

Das Kraftfahrzeug 10 mit dem Anzeigesystem 12 ist in Fig. 2 und Fig. 3 weiter ausgeführt. Dabei zeigt Fig. 2 eine schematische Darstellung eines Ausschnitts des Kraftfahrzeugs 10 mit dem Anzeigesystem 12 in einer Draufsicht und Fig. 3 eine korrespondierende Schnittdarstellung A-A mit jeweiligen Komponenten, die im Zusammenhang mit Fig. 1 bereits beschriebenen wurden. Fig. 2 zeigt somit die der Umgebung 26 zugewandte Scheibenflächen 20" der Windschutzscheibe 16, die an den beiden A-Säulen 30', 30" und einer Oberseite des Armaturenbretts 34 angrenzt, wobei dem Armaturenbrett 34 ein Lenkrad 45 angeordnet ist.

In Fig. 2 und Fig. 3 ist beispielhaft eine mögliche Ausführungsform der Bildquelle 40 dargestellt. Hierbei kann die Bildquelle 40 beispielsweise mehrere elektrische Leuchtmittel, jeweilige Anzeigen 42, 50', 50", 50", umfassen, die dazu eingerichtet sind, Lichtstrahlen S1 zu emittieren, die als Pfeilen in Fig. 3 dargestellt sind. Dabei kann die Bildquelle 40 eine ausschließlich eindimensional schaltbare Streifenanzeige 42 aufweisen, die im Armaturenbrett 34 parallel zu der von einem Krümmungsradius 44 vorgegebenen Seitenkante 22 und alternativ zu einem der von einem Krümmungsradius 44 vorgegebenen von der Scheibenschicht 18 separaten Bauteil 46 ist. Insbesondere kann es sich bei der Streifenanzeige 42 um einen als LED-Streifen ausgebildeten Einzelstreifen 48', 48" handeln. Dabei kann - wie für den Einzelstreifen 48" dargestellt, die Streifenanzeige 42 positionsfest in dem Armaturenbrett 34 angeordnet sein. Auch ist es möglich, dass der Einzelstreifen 48" der Streifenanzeige 42 an einem mittels der Steuervorrichtung 36 ansteuerbaren Aktuator 53 angeordnet ist, mittels welchem eine Relativposition P1, P2 der Streifenanzeige 42 verändert werden kann, wie mit einem Pfeil angedeutet ist. Der Übersicht halber zeigt der Pfeil nur eine mögliche Bewegungsrichtung des Aktuators 53 an.

Die in Fig. 2 und Fig. 3 gezeigte Bildquelle 40 kann zusätzlich eine zweidimensional schaltbare Bildanzeige 50 aufweisen, wobei vorliegend drei Einzelbildanzeigen 51', 51", 51 ‴ als Bildschirme dargestellt sind. Dabei kann eine relative Anordnung der Bildanzeige 50 und der Streifenanzeige 42 variabel ausgestaltet sein. Die den Einzelstreifen 48" umfassende Streifenanzeige 42 kann im Bereich der Bildanzeige 50, wie für die Einzelbildanzeige 51 ` dargestellt, unterbrochen sein und an zwei einander gegenüberliegenden Seiten 52', 52" an der Bildanzeige 50 angrenzen, falls die Streifenanzeige 42 innerhalb einer von der Bildanzeige 50 gebildeten Anzeigenebene E1 angeordnet ist. Auch kann die Bildanzeige 50, wie für die Einzelbildanzeige 51 ` dargestellt, die den Einzelstreifen 48' umfassende Streifenanzeige 42 in Richtung der Windschutzscheibe 16 überdecken. Dies wäre der Fall, wenn auf eine positionsvariable Anordnung mittels des Aktuators 53 verzichtet werden würde und der Einzelstreifen dauerhaft an der Relativposition P1 angeordnet wäre. In diesem Fall wären die beiden Einzelstreifen 48', 48" der Streifenanzeige 42 aneinander positioniert, wobei eine jeweilige Längserstreckungsachse A1, A2 jedes der Einzelstreifen 48', 48" in einer gemeinsamen Ebene E2 angeordnet ist, wobei jeweils nur einer der beiden Einzelstreifen 48', 48" mittels der Steuervorrichtung 36 anzusteuern ist. In Fig. 3 sind die Anzeigenebene E1 und die Ebene E2 beispielsweise deckungsgleich. Des Weiteren kann es möglich sein, die Bildanzeige 50 und die Streifenanzeige 42 zueinander überlappungsfrei anzuordnen, sodass in der Einbaulage der Windschutzscheibe 16 die Streifenanzeige 42 zwischen der Bildanzeige 50 und der Seitenkante 22 der Scheibenschicht 18 oder die Bildanzeige 50 zwischen der Streifenanzeige 42 und der Seitenkante 22 der Scheibenschicht 18 positioniert ist, wobei auf eine Darstellung einer derartigen Anordnung der Übersicht halber verzichtet wurde.

In Fig. 3 wird weiterhin dargestellt, wie die von der Bildquelle 40 emittierten Lichtstrahlen S1 zum Erzeugen von einem virtuellen Bild 54', 54" an ein einem Reflexionsbereich 58 als reflektierte Lichtstrahlen S2 zu reflektieren. Hierbei korrespondiert das virtuelle Bild 54' mit dem Einzelstreifen 48' der Streifenanzeige 42 in der jeweiligen Relativposition P1, P2 und das virtuelle Bild 54" mit dem Einzelstreifen 48" der Streifenanzeige 42. Das der Bildanzeige 50 zugeordnete virtuelle Bild 56 wird durch selektives Ansteuern von die Bildanzeige 50 bildenden Bildpunkten durch die Steuervorrichtung 36 erzeugt. Der Reflexionsbereich 58 kann sich parallel zu einer Seitenkante 22 der Scheibenschicht 18 erstrecken, wobei der Reflexionsbereich 58 entlang eines Seitenbereichs 61 der Scheibenschicht 18 an einer der Scheibenflächen 20', 20" bereitgestellt ist. Alternativ oder zusätzlich kann der Reflexionsbereich 58 entlang dem von der Scheibenschicht 18 separaten Bauteil 46 an dem Windschutzscheibenrahmen 28 bereitgestellt sein, wobei auf eine Darstellung der Übersicht halber verzichtet wurde. Dabei bildet der Reflexionsbereich 58 eine optisch durchgängige Anzeigefläche 60, die in Fig. 4 und Fig. 5 im Detail gezeigt ist, die seitlich von den A-Säulen 30', 30" des Kraftfahrzeugs 10 eingefasst und von einer digitalen Anzeige 62', 62" des Seitenspiegels 32', 32" begrenzt sein kann, wobei die digitale Anzeige 62', 62" als von der der jeweiligen A-Säule 30', 30" überdeckt in Fig. 3 schematisch angedeutet ist.

Mittels der Steuervorrichtung 36 kann die Bildquelle 40 angesteuert werden. Dabei kann in Abhängigkeit von den mit der Erfassungseinrichtung 38 erfassten Daten das virtuelle Bild 54', 54" der Streifenanzeige 42 und/oder das virtuelle Bild 56 der Bildanzeige 50 entlang einer als x-Achse bezeichneten Hochachse und einer als y-Achse gekennzeichneten Querachse des Kraftfahrzeugs 10 zu verlagert werden, um eine in Bezug auf den Fahrzeugnutzer 14 verdeckungsfreie Anzeige zu erzeugen. Auch kann jeweils nur einer der beiden Einzelstreifen 48', 48" zum Erzeugen des der Streifenanzeige 42 zugeordneten virtuellen Bild 54', 54" angesteuert werden. Des Weiteren kann zum Verlagern des virtuellen Bildes 54' die Relativposition P1, P2 des Einzelstreifens 48' der Streifenanzeige 42 zum Reflexionsbereich 58 verändert werden.

Fig. 4 und Fig. 5 zeigen jeweils unterschiedliche Ausgestaltung des Reflexionsbereichs 58 und des virtuellen Bilds 54', 54", 56' mit jeweiligen Komponenten, die im Zusammenhang mit Fig. 1, Fig. 2 und Fig. 3 bereits beschriebenen wurden. Die gezeigten Perspektivdarstellungen zeigen den Innenraum 24 des Kraftfahrzeugs 10 mit dem Anzeigesystem 12 in zwei Ausführungsformen, wobei eine Blickrichtung durch eine Windschutzscheibe 16 mit einer Vorwärtsbewegungsrichtung des Kraftfahrzeugs 10 übereinstimmt. Der Reflexionsbereich 58 kann zwei Flächenabschnitte 64', 64" aufweisen. Hierzu kann der Flächenabschnitt 64' dauerhaft opak und schwarz gefärbt sein und der Flächenabschnitt 64" mittels der Steuervorrichtung 36 von einem transparenten in zumindest einen teilweise opaken und teilweise schwarz eingefärbten Zustand zum Erzeugen des virtuellen Bildes 54', 54", 56 geschalten werden. Der eine dauerhaft opak und schwarz gefärbt ausgebildete Flächenabschnitt 64' kann - wie in Fig. 4 dargestellt - einen Siebdruckrand 66 umfassen, der mehrere Reflexionspartikel aufweist. Fig. 5 zeigt den schaltbaren Flächenabschnitt 64", der beispielsweise aus einem auf Flüssigkristallen basierenden Werkstoff gebildet ist. Somit kann mittels des schaltbaren Flächenabschnitts 64" beispielsweise eine Tönung oder ein farblicher Verlauf realisiert werden.

In Fig. 4 kann die Anzeigefläche 60 als das virtuelles Bild 54', 54", 56 der Streifenanzeige 42 zum Anzeigen einer vorgenommen Einstellung eines Steuerparameters, beispielsweise ein Betätigen eines Fahrtrichtungsanzeigers 65 angezeigt werden. Dabei kann ein dynamisches Lauflicht 68' einen Animationseffekt zum Anzeigen einer gewählten Fahrtrichtung anzeigen und ein statischer Lichtstreifen 68" einer von der gewählten Fahrtrichtung abweichende Fahrtrichtung anzeigen. Zusätzlich kann mittels der Bildanzeige 50 ein die gewählte Fahrtrichtung anzeigendes Pfeilsymbol 70 angezeigt werden. Des Weiteren kann ein verbleibendes Verhältnisses einer Speicherkapazität zu einer Gesamtspeicherkapazität, beispielsweise als ein verfügbarer Kraftstoffvorrat, oder ein Einstellvorgang, beispielsweise das Erhöhen einer aktuellen Geschwindigkeit zu einer maximal zulässigen Geschwindigkeit angezeigt werden. Hierbei kann auf eine redundante Anzeige mittels eines Kombiinstruments verzichtet oder aufgrund der redundanten Anzeige eine Aufmerksamkeit des Fahrzeugnutzers 14 gezielt gesteuert werden.

Zum Erzeugen des virtuellen Bilds 54', 54", 56 werden in einem ersten Schritt V1 der Einstellvorgang, die vorgenommene Einstellung des Steuerparameters und ein Speicherverhältnis erfasst, wobei mittels diese als Daten von der Erfassungseinrichtung 38 der Steuervorrichtung 36 bereitgestellt werden können. Anschließend kann in einem zweiten Schritt V2 in Abhängigkeit von dem Erfassen, das heißt basierend auf den erfassten Daten, mittels der Bildquelle 40 die Lichtstrahlen S1 emittiert werden, wobei die Bildquelle 40 hierzu von der Steuervorrichtung 36 angesteuert wird. Die emittierten Lichtstrahlen S1 werden in einem dritten Schritt V3 mittels des Reflexionsbereichs 58 reflektiert und erzeugen als reflektierte Lichtstrahlen S2 das virtuelle Bild 54', 54", 56, insbesondere als dynamisches Lauflicht 68' und als statischer Lichtstreifen 68".

Der Erfindung liegt die Erkenntnis zugrunde, dass eine Anwendung eines Blackprints, das heißt eines von dem Siebdruckrand 66 gebildeten Schwarzbereichs, normalerweise ungenutzt bleibt. Dabei kann dieser für eine zumindest zweidimensionale Anzeige als optisch durchgängig anmutende Anzeigefläche 60 dienen. Abgebildet können dadurch beispielsweise Symbole, die einen Warnhinweis oder einen Infotainmentinhalt beschreiben, eines Kombiinstruments oder eines virtuellen Assistenten angezeigt werden. Optional kann ein dreidimensionaler Eindruck der Anzeige durch eine Verwendung von einer dynamischen Perspektive (dynamic perspective) erzielt werden, die den Kopf oder die Augen des Fahrzeugnutzers 14 fortlaufend erfasst (Head- oder Eyetracking) und eine Perspektive des virtuellen Bilds 54', 54", 56 anpasst. Somit können Warnsymbole dynamisch in einer Blickrichtung des Fahrers (Fahrzeugnutzers 14) eingeblendet werden. Des Weiteren können auch visuellen Anzeigeinhalte im Kombiinstrument reduziert und Informationen im Sichtbereich des Fahrers (Fahrzeugnutzer 14) vor dem unbewegten und einfarbigen Hintergrund (Reflexionsbereich 58) angezeigt werden. Dabei kann die Bildquelle 40 insbesondere in dem Schwarzbereich an einer Scheibenwurzel (Seitenkante 22 der Windschutzscheibe 16) einspiegeln, wobei die Bildquelle 40 die Streifenanzeige 42 und die Bildanzeigen 50 aufweisen kann. Somit kann ein besonders hoher Kontrastwert bei der Anzeige realisiert werden, sodass die Anmutung entsteht, dass Schwarzbereich selbst die Streifenanzeige 42 oder die Bildanzeige 50 ist.

Insgesamt zeigen die Beispiele, wie durch die Erfindung eine Säulen-zu-Säulen-Anzeige (Pillar-to-Pillar-Display) durch Einspiegelung in den Schwarzbereich (Reflexionsbereich 58) der Scheibe (Windschutzscheibe 16) bereitgestellt werden kann.

## Patentansprüche

1. Kraftfahrzeug (10) mit einem Anzeigesystem (12),
a) umfassend eine Windschutzscheibe (16) mit zumindest einer Scheibenschicht (18) und zumindest eine in einem Armaturenbrett (34) des Kraftfahrzeugs (10) positionierte Bildquelle (40), die dazu eingerichtet ist, Lichtstrahlen (S1) zu emittieren,
b) wobei sich ein Reflexionsbereich (58) parallel zu einer Seitenkante (22) der zumindest einen Scheibenschicht (18) erstreckt, welcher in einer Einbaulage der Windschutzscheibe (16) im Kraftfahrzeug (10) an dem Armaturenbrett (34) angeordnet und dazu eingerichtet ist, die Lichtstrahlen (S1) zum Erzeugen eines virtuellen Bilds (54', 54") zu reflektieren,
c) der Reflexionsbereich (58) entlang zumindest eines Seitenbereichs (61) der zumindest einen Scheibenschicht (18) an zumindest einer Scheibenfläche (20', 20") und/oder entlang zumindest eines von der zumindest einen Scheibenschicht (18) separaten Bauteils (46) an einem Windschutzscheibenrahmen (28) bereitgestellt ist,
d) die zumindest eine Bildquelle (40)
- zumindest eine ausschließlich eindimensional schaltbare Streifenanzeige (42) vorsieht, welche im Armaturenbrett (34) parallel zu einer von einem Krümmungsradius (44) vorgegebenen Seitenkante (22) der zumindest einen Scheibenschicht (18) und/oder des zumindest einen Bauteils positioniert ist, und
e) eine Steuervorrichtung (36) des Kraftfahrzeugs (10) dazu eingerichtet ist,
- mittels der zumindest einen Streifenanzeige (42) als das virtuelle Bild (54', 54") ein dynamisches Lauflicht (68') zum Erzeugen eines Animationseffekts und/oder einen statischen Lichtstreifen (68") zum Anzeigen eines Einstellvorgangs und/oder einer vorgenommen Einstellung eines Steuerparameters und/oder eines verbleibenden Verhältnisses einer Speicherkapazität zu einer Gesamtspeicherkapazität bereitzustellen, **dadurch gekennzeichnet, dass**
die zumindest eine Bildquelle
- zusätzlich eine zumindest zweidimensional schaltbare Bildanzeige (50) aufweist, und
- mittels der zumindest zweidimensional schaltbaren Bildanzeige (50) ein der Bildanzeige (50) zugeordnetes virtuelles Bild (56) durch selektives Ansteuern von die Bildanzeige (50) bildenden Bildpunkten zu erzeugen.

2. Kraftfahrzeug (10) nach Anspruch 1, wobei
a) die zumindest eine Bildanzeige (50) die zumindest eine Streifenanzeige (42) in Richtung des Reflexionsbereichs (58) überdeckt und/oder
b) die zumindest eine Streifenanzeige (42) im Bereich der zumindest einen Bildanzeige (50) unterbrochen ist und an zwei einander gegenüberliegenden Seiten (52', 52") an der zumindest einen Bildanzeige (50) angrenzt, falls die Streifenanzeige (42) innerhalb einer von der zumindest einen Bildanzeige (50) gebildeten Anzeigenebene (E1) angeordnet ist, und/oder
c) die zumindest eine Bildanzeige (50) und die Streifenanzeige (42) zueinander überlappungsfrei in Richtung des Reflexionsbereichs (58) angeordnet sind, sodass in der Einbaulage der Windschutzscheibe (16) die Streifenanzeige (42) zwischen der zumindest einen Bildanzeige (50) und der den Reflexionsbereich (58) umfassenden Seitenkante (22) der zumindest einen Scheibenschicht (18) und/oder die zumindest eine Bildanzeige (50) zwischen der zumindest einen Streifenanzeige (42) und der den Reflexionsbereich (58) umfassenden Seitenkante (22) der zumindest einen Scheibenschicht (18) positioniert ist.

3. Kraftfahrzeug (10) nach einem der vorhergehenden Ansprüche, wobei der Reflexionsbereich (58) eine optisch durchgängige Anzeigefläche (60) bildet, welche seitlich von zumindest einer an die Windschutzscheibe (16) angrenzenden A-Säule (30', 30") des Kraftfahrzeugs (10) eingefasst und/oder von zumindest einer digitalen Anzeige (62', 62") eines Seitenspiegels (32', 32") begrenzt ist.

4. Kraftfahrzeug (10) nach einem der vorhergehenden Ansprüche, die Steuervorrichtung (36) bei der Ansteuerung der zumindest einen Bildquelle (40) eine mittels einer Erfassungseinrichtung (38) erfasste Position und/oder Orientierung eines Fahrzeugnutzers (14), insbesondere dessen Kopf und/oder Augen, und/oder eine erfasste Nutzerpräferenz berücksichtigt, wobei das virtuelle Bild (54', 54") entlang einer Hochachse und/oder Querachse des Kraftfahrzeugs (10) verlagert wird, um eine in Bezug auf den Fahrzeugnutzer (14) verdeckungsfreie Anzeige zu erzeugen.

5. Kraftfahrzeug (10) nach einem der vorhergehenden Ansprüche, wobei die Streifenanzeige (42) zumindest zwei aneinander positionierte Einzelstreifen (48', 48") umfasst, wobei eine jeweilige Längserstreckungsachse (A', A") jedes der zumindest zwei Einzelstreifen (48', 48") in einer zu dem Reflexionsbereich (58) korrespondierend orientierten Ebene (E2) angeordnet ist, wobei jeweils nur einer der zumindest zwei Einzelstreifen (48', 48") zum Erzeugen des der zumindest einen Streifenanzeige (42) zugeordneten virtuellen Bildes (54', 54") anzusteuern ist.

6. Kraftfahrzeug (10) nach einem der vorhergehenden Ansprüche, wobei die Streifenanzeige (42) an einem mittels der Steuervorrichtung (36) ansteuerbaren Aktuator (53) angeordnet ist, der dazu eingerichtet ist, zum Verlagern des virtuellen Bildes (54', 54") eine Relativposition (P1, P2) der zumindest einen Streifenanzeige (42) zum Reflexionsbereich (58) zu verändern.

7. Kraftfahrzeug (10) nach einem der vorhergehenden Ansprüche, wobei der Reflexionsbereich (58) zumindest einen Flächenabschnitt (64', 64") aufweist, welcher dauerhaft opak und schwarz gefärbt und/oder mittels der Steuervorrichtung (36) von einem transparenten in zumindest einen teilweise opaken und teilweise schwarz eingefärbten Zustand schaltbar zum Erzeugen des virtuellen Bildes (54', 54") ist.

8. Kraftfahrzeug (10) nach Anspruch 7, wobei der zumindest eine dauerhaft opak und schwarz gefärbt ausgebildete Flächenabschnitt (54") einen Siebdruckrand (66) umfasst, wobei der Siebdruckrand (66) mehrere Reflexionspartikel aufweist, und/oder der zumindest eine schaltbare Flächenabschnitt (54") von einem elektrochromen, thermochromen und/oder auf Flüssigkristallen basierenden Werkstoff gebildet ist.

9. Verfahren zum Betreiben eines Kraftfahrzeugs (10) mit einem Anzeigesystem (12), wobei das Kraftfahrzeug (10) eine Windschutzscheibe (16) mit zumindest einer Scheibenschicht (18), zumindest eine Bildquelle (40), einen Reflexionsbereich (58) und eine Steuervorrichtung (36) umfasst,
a) wobei die zumindest eine Bildquelle (40) in einem Armaturenbrett (34) des Kraftfahrzeugs (10) positioniert ist und zumindest eine ausschließlich eindimensional schaltbare Streifenanzeige (42) vorsieht, wobei die zumindest eine Streifenanzeige (42) im Armaturenbrett (34) parallel zu einer von einem Krümmungsradius (44) vorgegebenen Seitenkante (22) der zumindest einen Scheibenschicht (18) und/oder zumindest eines von der zumindest einen Scheibenschicht (18) separaten Bauteils (46) positioniert ist, und zusätzlich eine zumindest zweidimensional schaltbare Bildanzeige (50) aufweist,
b) wobei der Reflexionsbereich (58) sich parallel zu einer Seitenkante (22) der zumindest einen Scheibenschicht (18) erstreckt und in einer Einbaulage der Windschutzscheibe (16) im Kraftfahrzeug (10) an dem Armaturenbrett (34) angeordnet ist, wobei der Reflexionsbereich (58) entlang zumindest eines Seitenbereichs (61) der zumindest einen Scheibenschicht (18) an zumindest einer Scheibenfläche (20', 20") und/oder entlang des zumindest einen Bauteils (46) an einem Windschutzscheibenrahmen (28) bereitgestellt ist,
**gekennzeichnet durch** folgende Schritte:
i) Erfassen eines Einstellvorgangs und/oder einer vorgenommen Einstellung eines Steuerparameters und/oder eines verbleibenden Verhältnisses der Speicherkapazität zu einer Gesamtspeicherkapazität (V1);
ii) Emittieren von Lichtstrahlen (S1) mittels der zumindest einen Streifenanzeige (42) in Abhängigkeit von dem Erfassen, wobei die zumindest eine Bildquelle (40) mittels der Steuervorrichtung (36) angesteuert wird (V2);
iii) Reflektieren der emittierten Lichtstrahlen (S1) mittels des Reflexionsbereichs (58) zum Erzeugen von einem virtuellen Bild (54', 54"), wobei als das virtuelle Bild (54', 54") ein dynamisches Lauflicht (68') zum Erzeugen eines Animationseffekts und/oder ein statischer Lichtstreifen (68") zum Anzeigen des Einstellvorgangs und/oder der vorgenommen Einstellung des Steuerparameters und/oder eines verbleibenden Verhältnisses der Speicherkapazität zu einer Gesamtspeicherkapazität bereitgestellt wird (V3)
iv) Erzeugen eines der Bildanzeige (50) zugeordneten virtuellen Bildes (56) mittels der zumindest zweidimensional schaltbaren Bildanzeige (50) durch selektives Ansteuern von die Bildanzeige (50) bildenden Bildpunkten.

## Claims

1. A motor vehicle (10) with a display system (12),
a) comprising a windshield (16) with at least one pane layer (18) and at least one image source (40) positioned in a dashboard (34) of the motor vehicle (10), which is configured to emit light beams (S1),
b) wherein a reflection region (58) extends parallel to a lateral edge (22) of the at least one pane layer (18), which is disposed on the dashboard (34) in an installation position of the windshield (16) in the motor vehicle (10) and configured to reflect the light beams (S1) for generating a virtual image (54', 54"),
c) the reflection region (58) is provided along at least one lateral region (61) of the at least on pane layer (18) on at least one pane surface (20', 20") and/or along at least one component (46) separate from the at least one pane layer (18) on a windshield frame (28),
d) the at least one image source (40)
- provides at least one exclusively one-dimensionally switchable strip display (42), which is positioned in the dashboard (34) parallel to a lateral edge (22), preset by a radius of curvature (44), of the at least one pane layer (18) and/or of the at least one component, and
e) a controller (36) of the motor vehicle (10) is configured
- to provide a dynamic running light (68') for generating an animation effect and/or a static light strip (68") for displaying a setting process and/or a performed setting of a control parameter and/or a remaining ratio of a storage capacity to a total storage capacity as the virtual image (54', 54") by means of the at least one strip display (42),
**characterized in that**
the at least one image source
- additionally comprises an at least two-dimensionally switchable image display (50), and
- to generate a virtual image (56) associated with the image display (50) switchable by means of the at least two-dimensionally switchable image display (50) by selectively activating pixels forming the image display (50).

2. The motor vehicle (10) according to claim 1, wherein
a) the at least one image display (50) overlaps with the at least one strip display (42) in the direction of the reflection region (58), and/or
b) the at least one strip display (42) is interrupted in the region of the at least one image display (50) and adjoins to two sides (52', 52") opposite to each other on the at least one image display (50) if the strip display (42) is disposed withing a display plane (E1) formed by the at least one image display (50), and/or
c) the at least one image display (50) and the strip display (42) are disposed without overlap in relation to each other in the direction of the reflection region (58), such that, in the installation position of the windshield (16), the strip display (42) is positioned between the at least one image display (50) and the lateral edge (22) including the reflection region (58) of the at least one pane layer (18) and/or the at least one image display (50) is positioned between the at least one strip display (42) and the lateral edge (22) including the reflection region (58) of the at least one pane layer (18).

3. The motor vehicle (10) according to any one of the preceding claims, wherein the reflection region (58) forms an optically continuous display surface (60), which is laterally bordered by at least one A-pillar (30', 30") of the motor vehicle (10) adjoining to the windshield (16) and/or is delimited by at least one digital display (62', 62") of a side mirror (32', 32").

4. The motor vehicle (10) according to any one of the preceding claims, wherein the controller (36) considers a position and/or orientation of a vehicle user (14), in particular the head and/or eyes thereof, acquired by means of an acquisition device (38), and/or an acquired user preference in activating the at least one image source (40), wherein the virtual image (54', 54") is displaced along a vertical axis and/or transverse axis of the motor vehicle (10) to generate a display unconcealed with reference to the vehicle user (14).

5. The motor vehicle (10) according to any one of the preceding claims, wherein the strip display (42) includes at least two single strips (48', 48") positioned against each other, wherein a respective longitudinal extension axis (A', A") of each of the at least two single strips (48', 48") is disposed in a plane (E2) oriented corresponding to the reflection region (58), wherein each only one of the at least two single strips (48', 48") is to be activated for generating the virtual image (54', 54") associated with the at least one strip display (42).

6. The motor vehicle (10) according to any one of the preceding claims, wherein the strip display (42) is disposed on an actuator (53) activatable by means of the controller (36), which is configured to change a relative position (P1, P2) of the at least one strip display (42) to the reflection range (58) for displacing the virtual image (54', 54").

7. The motor vehicle (10) according to any one of the preceding claims, wherein the reflection region (58) comprises at least one surface section (64', 64"), which is permanently opaque and colored black and/or switchable by means of the controller (36) from a transparent into at least one partially opaque and partially black colored state for generating the virtual image (54', 54").

8. The motor vehicle (10) according to claim 7, wherein the at least one surface section (54") formed permanently opaque and black colored includes a screen printed edge (66), wherein the screen printed edge (66) comprises multiple reflection particles, and/or the at least one switchable surface section (54") is formed of an electrochromic material, thermochromic material and/or a material based on liquid crystals.

9. A method for operating a motor vehicle (10) with a display system (12), wherein the motor vehicle (10) comprises a windshield (16) with at least one pane layer (18), at least one image source (40), a reflection region (58) and a controller (36),
a) wherein the at least one image source (40) is positioned in a dashboard (34) of the motor vehicle (10) and provides at least one exclusively one-dimensionally switchable strip display (42), wherein the at least one strip display (42) is positioned in the dashboard (34) parallel to a lateral edge (22), preset by a radius of curvature (44), of the at least one pane layer (18) and/or at least one component (46) separate from the at least one pane layer (18), and additionally comprises an at least two-dimensionally switchable image display (50),
b) wherein the reflection region (58) extends parallel to a lateral edge (22) of the at least one pane layer (18) and is disposed on the dashboard (34) in an installation position of the windshield (16) in the motor vehicle (10), wherein the reflection region (58) is provided along at least one lateral region (61) of the at least one pane layer (18) on at least one pane surface (20', 20") and/or along the at least one component (46) on a windshield frame (28),
**characterized by** the following steps:
i) acquiring a setting process and/or a performed setting of a control parameter and/or a remaining ratio of the storage capacity to a total storage capacity (V1);
ii) emitting light beams (S1) by means of the at least one strip display (42) depending on the acquisition, wherein the at least one image source (40) is activated by means of the controller (36) (V2);
iii) reflecting the emitted light beams (S1) by means of the reflection region (58) for generating a virtual image (54', 54"), wherein a dynamic running light (68') for generating an animation effect and/or a static light strip (68") for displaying the setting process and/or the performed setting of the control parameter and/or a remaining ratio of the storage capacity to a total storage capacity is provided as the virtual image (54', 54") (V3),
iv) generating a virtual image (56) associated with the image display (50) by means of the at least two-dimensionally switchable image display (50) by selectively activating pixels forming the image display (50).

## Revendications

1. Véhicule à moteur (10) comportant un système d'affichage (12),
a) incluant un pare-brise (16) ayant au moins une couche de verre (18) et au moins une source d'image (40) positionnée dans un tableau de bord (34) du véhicule à moteur (10), laquelle source d'image étant configurée pour émettre des faisceaux lumineux (S1),
b) une zone de réflexion (58) s'étendant parallèlement à un bord latéral (22) de la au moins une couche de verre (18), laquelle zone de réflexion étant agencée sur le tableau de bord (34) dans une position de montage du pare-brise (16) dans le véhicule à moteur (10) et étant conçue pour réfléchir les faisceaux lumineux (S1) afin de générer une image virtuelle (54', 54"),
c) la zone de réflexion (58) étant disposée le long d'au moins une zone latérale (61) de la au moins une couche de verre (18) sur au moins une surface de verre (20', 20") et/ou le long d'au moins un composant (46) séparé de la au moins une couche de verre (18) sur un cadre de pare-brise (28),
d) la au moins une source d'image (40)
- incluant au moins un affichage à bande (42) commutable de façon exclusivement unidimensionnelle, qui est positionné dans le tableau de bord (34) parallèlement à un bord latéral (22) prédéterminé par un rayon de courbure (44) de la au moins une couche de verre (18) et/ou du au moins un composant, et
e) un dispositif de commande (36) du véhicule à moteur (10) étant configuré pour :
- fournir, au moyen du au moins un affichage à bande (42), un feu de position dynamique (68') sous forme d'image virtuelle (54', 54"), afin de générer un effet d'animation et/ou une bande lumineuse statique (68") pour afficher une opération de réglage et/ou un réglage effectué d'un paramètre de commande et/ou d'un rapport restant d'une capacité de stockage sur une capacité de stockage totale, **caractérisé en ce que** la au moins une source d'image comporte en outre un affichage d'image (50) commutable de façon au moins bidimensionnelle, et
- générer, au moyen de l'affichage d'image (50) commutable de façon au moins bidimensionnelle, une image virtuelle (56) associée à l'affichage d'image (50) par une commande sélective de pixels formant l'affichage d'image (50).

2. Véhicule à moteur (10) selon la revendication 1, dans lequel
a) le au moins un affichage d'image (50) recouvre le au moins un affichage à bande (42) en direction de la zone de réflexion (58) et/ou
b) le au moins un affichage à bande (42) est interrompu dans la zone du au moins un affichage d'image (50) et est adjacent au au moins un affichage d'image (50) sur deux côtés opposés (52', 52"), si l'affichage à bande (52) est agencé à l'intérieur d'un plan d'affichage (E1) formé par le au moins un affichage d'image (50), et/ou
c) le au moins un affichage d'image (50) et l'affichage à bande (42) sont agencés sans se chevaucher en direction de la zone de réflexion (58), de sorte que dans la position de montage du pare-brise (16), l'affichage à bande (42) est positionné entre le au moins un affichage d'image (50) et le bord latéral (22) incluant la zone de réflexion (58) de la au moins une couche de verre (18) et/ou le au moins un affichage d'image (50) est positionné entre le au moins un affichage à bande (42) et le bord latéral (22) incluant la zone de réflexion (58) de la au moins une couche de verre (18).

3. Véhicule à moteur (10) selon l'une des revendications précédentes, dans lequel la zone de réflexion (58) forme une surface d'affichage (60) optiquement continue qui est latéralement entourée par au moins un montant avant (30', 30") adjacent au pare-brise (16) du véhicule à moteur (10) et/ou est délimitée par au moins un affichage numérique (62', 62") d'un rétroviseur latéral (32', 32").

4. Véhicule à moteur (10) selon l'une des revendications précédentes, dans lequel le dispositif de commande (36) tient compte, lors de la commande de la au moins une source d'image (40), d'une position et/ou d'une orientation d'un utilisateur de véhicule (14) détectée au moyen d'un dispositif de détection (38), en particulier de sa tête et/ou de ses yeux, et/ou d'une préférence d'utilisateur détectée, l'image virtuelle (54', 54") étant déplacée le long d'un axe vertical et/ou transversal du véhicule à moteur (10) afin de générer un affichage non caché par rapport à l'utilisateur de véhicule (14).

5. Véhicule à moteur (10) selon l'une des revendications précédentes, dans lequel l'affichage à bande (42) comprend au moins deux bandes individuelles (48', 48") positionnées l'une sur l'autre, un axe d'extension longitudinal (A', A") respectif de chacune des au moins deux bandes individuelles (48', 48") étant agencé dans un plan (E2) orienté d'une manière correspondant à la zone de réflexion (58), une seule des au moins deux bandes individuelles (48', 48") devant être respectivement commandée pour générer l'image virtuelle (54', 54") associée au au moins un affichage à bande (42).

6. Véhicule à moteur (10) selon l'une des revendications précédentes, dans lequel l'affichage à bande (42) est agencé sur un actionneur (53) pouvant être commandé au moyen du dispositif de commande (36), lequel actionneur étant configuré pour changer une position relative (P1, P2) du au moins un affichage à bande (42) par rapport à la zone de réflexion (58) afin de déplacer l'image virtuelle (54', 54").

7. Véhicule à moteur (10) selon l'une des revendications précédentes, dans lequel la zone de réflexion (58) comporte au moins une partie de surface (64', 64") qui est opaque en permanence et de couleur noire et/ou qui peut être commutée au moyen du dispositif de commande (36) d'un état transparent à un état au moins partiellement opaque et partiellement coloré en noir afin de générer l'image virtuelle (54', 54").

8. Véhicule à moteur (10) selon la revendication 7, dans lequel la au moins une partie de surface opaque en permanence et de couleur noire (54") comprend un bord imprimé par sérigraphie (66), le bord imprimé par sérigraphie (66) comportant une pluralité de particules de réflexion, et/ou la au moins une partie de surface (54") commutable étant formée à partir d'un matériau électrochromique, thermochromique et/ou à base de cristaux liquides.

9. Procédé pour faire fonctionner un véhicule à moteur (10) comportant un système d'affichage (12), dans lequel le véhicule à moteur (10) comprend un pare-brise (16) ayant au moins une couche de verre (18), au moins une source d'image (40), une zone de réflexion (58) et un dispositif de commande (36).
a) la au moins une source d'image (40) étant positionnée dans un tableau de bord (34) du véhicule à moteur (10) et étant munie d'au moins un affichage à bande (42) commutable de façon exclusivement unidimensionnelle, le au moins un affichage à bande (42) étant positionné dans le tableau de bord (34) parallèlement à un bord latéral (22) prédéterminé par un rayon de courbure (44) de la au moins une couche de verre (18) et/ou d'au moins un composant (46) séparé de la au moins une couche de verre (18), et comportant en outre un affichage d'image (50) commutable de façon au moins bidimensionnelle,
b) la zone de réflexion (58) s'étendant parallèlement à un bord latéral (22) de la au moins une couche de verre (18) et étant agencée sur le tableau de bord (34) dans une position de montage du pare-brise (16) dans le véhicule à moteur (10), la zone de réflexion (58) étant disposée le long d'au moins une zone latérale (61) de la au moins une couche de verre (18) sur au moins une surface de verre (20', 20") et/ou le long du au moins un composant (46) sur un cadre de pare-brise (28),
**caractérisé en ce qu'**il comporte les étapes suivantes :
i) détecter une opération de réglage et/ou un réglage effectué d'un paramètre de commande et/ou d'un rapport restant de la capacité de stockage sur une capacité de stockage totale (V1) ;
ii) émettre des faisceaux lumineux (S1) au moyen du au moins un affichage à bande (42) en fonction de la détection, la au moins une source d'image (40) étant commandée au moyen du dispositif de commande (36) (V2) ;
iii) réfléchir les faisceaux lumineux émis (S1) au moyen de la zone de réflexion (58) afin de générer une image virtuelle (54', 54"), un feu de position dynamique (68') étant fourni sous forme d'image virtuelle (54', 54") afin de générer un effet d'animation et/ou une bande lumineuse statique (68") afin d'afficher l'opération de réglage et/ou le réglage effectué du paramètre de commande et/ou d'un rapport restant de la capacité de stockage sur une capacité de stockage totale (V3) ;
iv) générer une image virtuelle (56) associée à l'affichage d'image (50) au moyen du au moins un affichage d'image (50) commutable de façon bidimensionnelle, par une commande sélective de pixels formant l'affichage d'image (50).
